# EUROPEAN PATENT APPLICATION

(11) **EP 3 330 835 A1**
(43) Date of publication of application: **06.06.2018**
(21) Application number: 16904845.1
(22) Date of filing: 19.08.2016
(51) Int. Cl.: G06F 1/26

(54) **POWER ADAPTER, TERMINAL DEVICE, CHARGING SYSTEM, AND CHARGING METHOD**

(71) Applicant: Shenzhen Royole Technologies Co., Ltd, Shenzhen, Guangdong 518172 (CN)
(72) Inventor: GUO, Jilong, Shenzhen Guangdong 518052 (CN)
(74) Representative: Hamer, Christopher K.
(86) International application number: PCT/CN2016/096043
(87) International publication number: WO 2018/032503

(57) **Abstract**

Provided is a power adapter, a terminal device, a charging system, and a charging method. The power adapter includes a port configured to connect with a terminal device for charging that includes a first pin, a second pin, a third pin, and a fourth pin, a first switching circuit connecting to the second pin and further controllably connecting to the first pin, a second switching circuit connecting to the third pin and further controllably connecting to the fourth pin, a power switching circuit connecting to the first and the fourth pin, and a control circuit connecting to the power switching circuit, the first and the second switching circuit, and connecting to the second and the third pin via the first and the second switching circuit respectively. The control circuit controls to increase power output to the short-circuited first and second pin and the short-circuited third and fourth pin, when the control circuit accomplishes a handshake with the terminal device via the second and the third pin. The terminal device, the charging system and the charging method are also provided. Embodiments of the present disclosure can facilitate increasing charging speed and shortening charging time.

## Description

### TECHNICAL FIELD

The present disclosure relates to the field of charging, and more particularly, to a power adapter, a terminal device, a charging system, and a charging method.

### BACKGROUND

Currently, smart phones are favored by consumers. Because of large power consume, the smart phone needs to be charged frequently. As battery capacity of the smart phone becomes larger, charging time becomes longer correspondingly. How to implement a fast charging has become a problem to be solved.

In the related art, there are usually two ways to achieve the purpose of fast charging: (1) increasing an output current of a power adapter, and (2) increasing an output voltage of a power adapter. However, operations of increasing the output current and increasing the output voltage cannot be conducted simultaneously in the related art, thereby making it hard or even impossible to further increase charging speed of a battery or shorten charging time. When choosing to increase the output current, both the power adapter and a terminal device to be charged need a special and customized port.

### SUMMARY

Embodiments of the present disclosure provide a power adapter, a terminal device, a charging system, and a charging method, so as to further increase charging speed of a battery and shorten charging time.

According to a first aspect of embodiments of the present disclosure, there is provided a power adapter, which includes a port, a first switching circuit, a second switching circuit, a power switching circuit, and a control circuit.

The port is configured to connect with a terminal device for charging and the port includes a first pin, a second pin, a third pin, and a fourth pin.

The first switching circuit connects to the second pin and further controllably connects to the first pin.

The second switching circuit connects to the third pin and further controllably connects to the fourth pin.

The power switching circuit connects to the first pin and the fourth pin.

The control circuit connects to the power switching circuit, the first switching circuit, and the second switching circuit, and connects to the second pin and the third pin via the first switching circuit and the second switching circuit respectively. When the control circuit accomplishes a handshake with the terminal device via the second pin and the third pin, the control circuit controls the first switching circuit to further connect to the first pin to short-circuit the first pin and the second pin, controls the second switching circuit to further connect to the fourth pin to short-circuit the third pin and the fourth pin, and controls the power switching circuit to increase power output to the short-circuited first pin and second pin and the short-circuited third pin and fourth pin.

According to a second aspect of embodiments of the present disclosure, there is provided a terminal device, which includes a port, a first switching circuit, a second switching circuit, and a control circuit.

The port is configured to connect with a power adapter to be charged and the port includes a first pin, a second pin, a third pin, and a fourth pin.

The first switching circuit connects to the second pin and further controllably connects to the first pin.

The second switching circuit connects to the third pin and further controllably connects to the fourth pin.

The control circuit connects to the first switching circuit and the second switching circuit, and connects to the second pin and third pin via the first switching circuit and the second switching circuit. When the control circuit accomplishes a handshake with the power adapter via the second pin and the third pin, the control circuit controls the first switching circuit to further connect to the first pin to short-circuit the first pin and the second pin, and controls the second switching circuit to further connect to the fourth pin to short-circuit the third pin and the fourth pin.

According to a third aspect of embodiments of the present disclosure, there is provided a charging system, which includes a power adapter and a terminal device.

Both the terminal device and the power adapter include a port, a first switching circuit, a second switching circuit, and a control circuit. The power adapter further includes a power switching circuit.

Each port of the terminal device and the power adapter includes a first pin, a second pin, a third pin, and a fourth pin.

Each first switching circuit of the terminal device and the power adapter connects to each second pin of the each port and further controllably connects to each first pin, and each second switching circuit of the terminal device and the power adapter connects to each third pin of the each port and further controllably connects to each fourth pin.

The power switching circuit connects to the first pin and the fourth pin of the port of the power adapter.

Each control circuit of the terminal device and the power adapter connects to the each first switching circuit and the each second switching circuit, and connects to the second pin and the third pin of the each port via the each first switching circuit and the each second switching circuit respectively; when the each control circuit accomplishes a handshake with each other via the second pin and the third pin, the each control circuit of the terminal device and the power adapter controls the each first switching circuit to further connect to the each first pin to short-circuit the each first pin and the each second pin, and controls the each second switching circuit to further connect to the each fourth pin to short-circuit the each third pin and the each fourth pin; the control circuit of the power adapter further controls the power switching circuit to increase power output to the short-circuited first pin and second pin, and the short-circuited third pin and fourth pin.

According to a fourth aspect of embodiments of the present disclosure, there is provided a charging method, which can be applied to a power adapter with a port, and the port includes a first pin, a second pin, a third pin, and a fourth pin; the charging method includes the follows.

The power adapter detects whether a terminal device connects.

When detecting that a terminal device connects, the power adapter initiates a handshake and detects whether the handshake is successful.

When the handshake is successful, the power adapter short-circuits the first pin and the second pin, and short-circuits the third pin and the fourth pin.

The power adapter increases power output to the short-circuited first pin and second pin, and the short-circuited third pin and fourth pin for charging.

As can be seen, by means of embodiments of the present disclosure, a power adapter can detect whether a terminal device connects. When the power adapter detects that a terminal device connects and shakes hand with the terminal device successfully, the power adapter controls to short-circuit the first pin and the second pin, and short-circuit the third pin and the fourth pin of the port of the power adapter, so as to increase power output to the short-circuited first pin and second pin, and to the short-circuited third pin and fourth pin, thereby further increasing charging speed and shortening charging time.

### BRIEF DESCRIPTION OF THE DRAWINGS

In order to illustrate the technical solutions of the embodiments of the present disclosure more clearly, the drawings used in the embodiments will be briefly described, it will be apparent that the drawings described in the following are embodiments of the present disclosure, and it will be apparent to those skilled in the art that other drawings can be obtained from the drawings without any creative work.

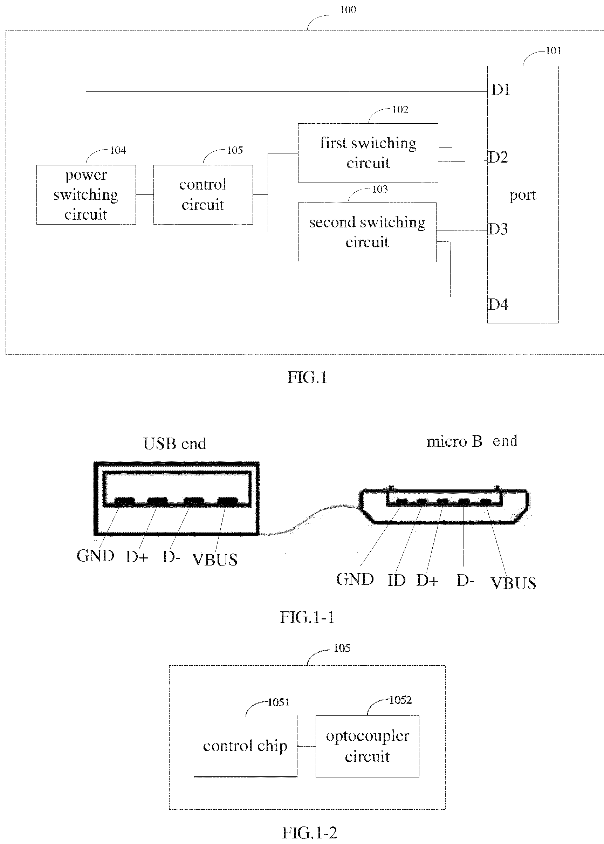

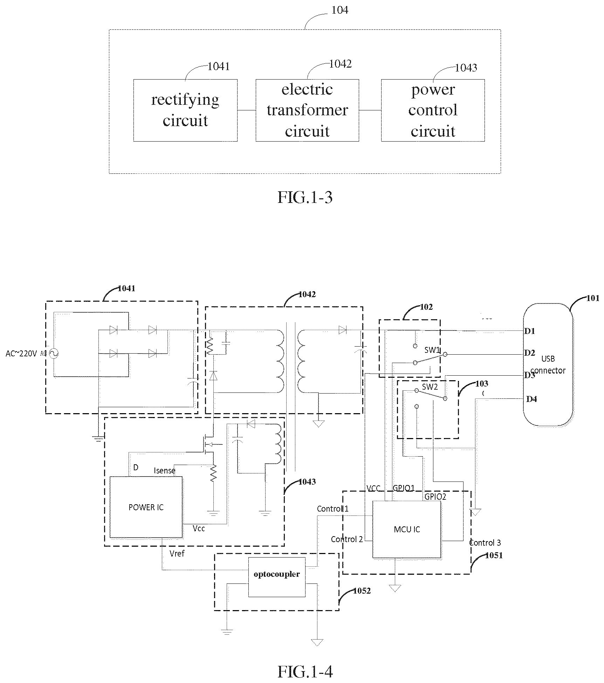

FIG.1 is a block diagram of a power adapter according to an embodiment of the present disclosure.
FIG.1-1 is a schematic diagram of a port of the power adapter illustrated in FIG.1 according to an embodiment.
FIG.1-2 is a block diagram of a control circuit of the power adapter illustrated in FIG.1.
FIG.1-3 is a block diagram of a power switching circuit of the power adapter illustrated in FIG.1.
FIG.1-4 is a circuit diagram of the power adapter illustrated in FIG.1.
FIG.2 is a block diagram of a terminal device according to an embodiment of the present disclosure.
FIG.2-1 is a circuit diagram of the terminal device illustrated in FIG.2.
FIG.3 is a block diagram of a charging system according to an embodiment of the present disclosure.
FIG.3-1 is a block diagram of a charging system according to another embodiment of the present disclosure.
FIG.4 is a flow chart diagram of a charging method according to an embodiment of the present disclosure.
FIG.5 is a flow chart diagram of a charging method according to another embodiment of the present disclosure.

### DETAILED DESCRIPTION OF ILLUSTRATED EMBODIMENTS

Technical solutions of the present disclosure will be described clearly and completely with reference to the accompanying drawings; obviously, embodiments described are merely part of rather than all of embodiments of the present disclosure.

Referring to FIG.1, FIG.1 is a block diagram of a power adapter according to an embodiment of the present disclosure. As illustrated in FIG.1, the power adapter 100 includes a port 101, a first switching circuit 102, a second switching circuit 103, a power switching circuit 104, and a control circuit 105. The circuit diagram of the power adapter 100 can be referred to FIG.1-4 and the present disclosure cannot be limited to the circuit diagram obviously.

Specifically, the port 101 is configured to connect with a terminal device (that will be described later) for charging. The port 101 includes a first pin D1, a second pin D2, a third pin D3, and a fourth pin D4. For instance, the port 101 can be a universal serial bus (USB) port, the first pin can be a VBUS pin, the second pin can be a D-pin, the third pin can be a D+ pin, and the fourth pin can be a GND pin; or the first pin can be the VBUS pin, the second pin can be the D+ pin, the third pin can be the D- pin, and the fourth pin can be the GND pin. Specifically, a wiring diagram of the USB data cable can be referred to FIG. 1-1 and FIG.1-1 is a schematic diagram of the port of the power adapter illustrated in FIG.1 according to an embodiment.

The first switching circuit 102 connects to the second pin D2 and further controllably connects to the first pin D1. The second switching circuit 103 connects to the third pin D3 and further controllably connects to the fourth pin D4. The power switching circuit 104 connects to the first pin D1 and the fourth pin D4. The control circuit 105 connects to the power switching circuit 104, the first switching circuit 102, and the second switching circuit 103, and connects to the second pin D2 and the third pin D3 via the first switching circuit 103 and the second switching circuit 104 respectively. When the control circuit 105 accomplishes a handshake via the second pin D2 and the third pin D3 with a corresponding second pin and a third pin of the terminal device, the control circuit 105 controls the first switching circuit 102 to further connect to the first pin D1 to short-circuit the first pin and the second pin D2, controls the second switching circuit 103 to further connect to the fourth pin D4 to short-circuit the third pin and the fourth pin D4. The control circuit 105 further controls the power switching circuit 104 to increase power output to the short-circuited first pin D1 and second pin D2 and the short-circuited third pin D3 and fourth pin D4.

For instance, when the D+ pin and the D- pin of the power adapter accomplishes the handshake with a corresponding D+ pin and D- pin of the terminal device, the control circuit 105 controls the first switching circuit 102 to short-circuit the VBUS pin and the D+ pin, and to short-circuit the GND pin and the D- pin simultaneously, and further controls the power switching circuit 104 to increase power output to the short-circuited VBUS pin and D+ pin and the short-circuited GND pin and D- pin. Or, when the D+ pin and the D- pin of the power adapter accomplishes the handshake with the corresponding D+ pin and D- pin of the terminal device, the control circuit 105 can also control the first switching circuit 102 to short-circuit the VBUS pin and the D- pin, and to short-circuit the GND pin and the D+ pin simultaneously, and can further control the power switching circuit 104 to increase power output to the short-circuited VBUS pin and D- pin and the short-circuited GND pin and D+ pin.

In some implementations, when the control circuit 105 accomplishes the handshake with the terminal device, if the power adapter shakes hands with the terminal device successfully, the control circuit 105 controls the power switching circuit 104 to increase a current output to the short-circuited first pin and second pin D2 and the short-circuited third pin and fourth pin D4. When the control circuit 105 accomplishes the handshake with the terminal device, if original pins can pass a current of 1.8A, the control circuit 105 controls the power switching circuit 104 to make the current passed by the short-circuited first pin D1 and second pin D2 larger than 1.8A, and the current passed by the short-circuited third pin D3 and fourth pin D4 larger than 1.8A as well. For instance, the control circuit 105 controls the power switching circuit 104 to make the current of the short-circuited first pin D1 and second pin D2 and the short-circuited third pin D3 and fourth pin D4 reach 3.6A respectively. If the original pins can pass a current of 2A, when the control circuit 105 accomplishes the handshake with the terminal device, the control circuit 105 controls the power switching circuit 104 to make the current of the short-circuited first pin D1 and second pin D2 and the short-circuited third pin D3 and fourth pin D4 reach 4A.

If the power adapter fails in the handshake with the terminal device, the power adapter maintains an original communication state, the first pin and the second pin are not short-circuited, the third pin and the fourth pin are not short-circuited, and an output current maintains the largest output current of each pin 1.8A. When the conductivity of a metal port is great, the largest output current of a metal contact can reach 2A.

In some implementations, when accomplishing the handshake with the terminal device, the control circuit 105 controls the power switching circuit 104 to increase a voltage applied to the short-circuited first pin D1 and second pin D2, and the short-circuited third pin D3 and fourth pin D4. When the control circuit 105 accomplishes the handshake with the terminal device, if the USB defined standard voltage of the original pins is 3.8V, the control circuit 105 controls the power switching circuit 104 to make the voltage of the short-circuited first pin and second pin D1, D2 and the short-circuited third pin and fourth pin D3, D4 larger than 3.8V. For instance, the control circuit 105 controls the power switching circuit 104 to make the largest output voltage of the short-circuited first pin D1 and second pin D2 reach any voltage value from 3.8V to 20V.

If the power adapter fails in the handshake with the terminal device, the power adapter maintains an original communication state still, the first pin and the second pin are not short-circuited, the third pin and the fourth pin are not short-circuited.

In some implementations, when accomplishing the handshake with the terminal device, the control circuit 105 controls the power switching circuit 104 to increase the current output to the short-circuited first pin D1 and second pin D2 and the short-circuited third pin D3 and fourth pin D4 and to increase the voltage applied to the short-circuited first pin D1 and second pin D2, and to the short-circuited third pin and fourth pin D3, D4. That is, when the control circuit 105 accomplishes the handshake with the terminal device, if a current of 1.8A can be passed and a voltage of 3.8V can be applied to, the control circuit 105 controls the power switching circuit 104 to make the voltage of the short-circuited first pin D1 and second pin D2 and the short-circuited third pin and fourth pin D3, D4 larger than 3.8V and to make the current lager than 1.8A.

In some implementations, the control circuit 105 further connects to the first pin D1 and is configured to provide working power to the control circuit.

In some implementations, FIG.1-2 is a block diagram of the control circuit of the power adapter illustrated in FIG.1. As illustrated in FIG.1-2, the control circuit 105 can further include a control chip 1051 and an optocoupler circuit 1052. The control chip 1051 connects to the first switching circuit 102 and the second switching circuit 103, and to the power switching circuit 104 via the optocoupler circuit 1052.

FIG.1-3 is a block diagram of the power switching circuit of the power adapter illustrated in FIG.1. As illustrated in FIG.1-3, the power switching circuit 104 can further include a rectifying circuit 1041, an electric transformer circuit 1042, and a power control circuit 1043. The rectifying circuit 1041 is configured to connect to an external alternating current power and convert it to a direct current power. The electric transformer circuit 1042 includes an input end for inputting the direct current power and an output end connecting with the first pin. The power control circuit 1043 receives a control signal from the control circuit 105 and controls output power of the electric transformer circuit 1042 correspondingly.

In some implementations, a handshake protocol of the handshake is sent from the terminal device first.

In some implementations, the control circuit 105 further controls the first switching circuit 102 to keep an original connection state with the second pin D2 and controls the second switching circuit 103 to keep an original connection state with the third pin D3, when it fails in the handshake with the terminal device via the second pin and the third pin D3.

In some implementations, the control circuit 105 further controls the first switching circuit 102 to disconnect from the first pin D1 and controls the second switching circuit 103 to disconnect from the fourth pin D4, when the port 101 disconnects from the terminal device, thus facilitating performing a normal handshake communication when connecting with the terminal device next time.

As can be seen, by means of embodiments of the present disclosure, the power adapter can detect whether a terminal device connects. When the power adapter detects that a terminal device connects and shakes hands with the terminal device successfully, the power adapter controls to short-circuit the first pin and the second pin, and short-circuit the third pin and the fourth pin of the port of the power adapter, so as to increase power output to the short-circuited first pin and second pin, and to the short-circuited third pin and fourth pin, thereby achieving the maximum resource utilization of the ports in relation to currently related charging technology that leads the D+ and the D- two cables to be idle when charging. Embodiments of the present disclosure achieve the maximum utilization of resource when a standard USB cable is charging, and improvement of charging capacity based on standard ports, thus facilitating increasing charging speed and shortening charging time.

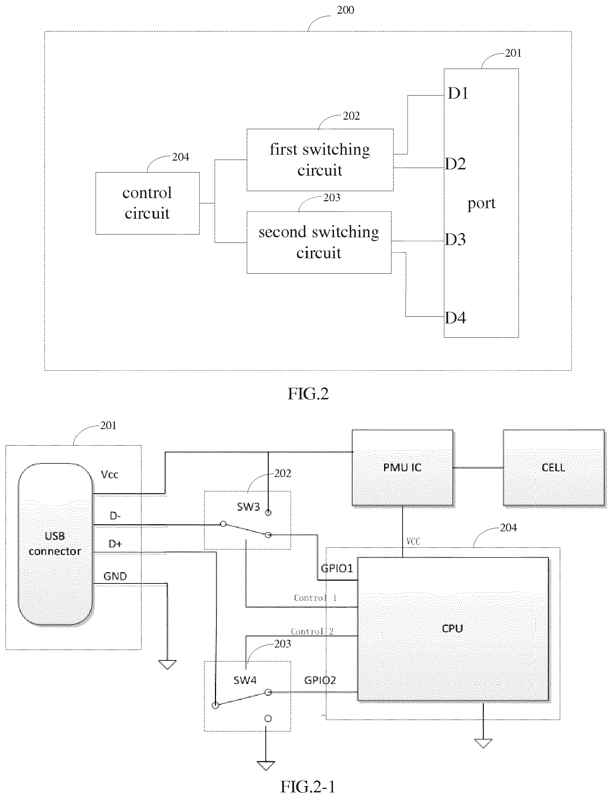

Referring to FIG.2, FIG.2 is a block diagram of a terminal device according to an embodiment of the present disclosure. As illustrated in FIG.2, the terminal device 200 includes a port 201, a first switching circuit 202, a second switching circuit 203, and a control circuit 204.

The terminal device can include, but not be limited to, a mobile phone, a wearable device, a tablet computer, an on-board equipment (OBU) or other electronic equipment.

The port 201 is configured to connect with a power adapter to be charged and the port 201 includes a first pin D1, a second pin D2, a third pin D3, and a fourth pin D4. The power adapter can be the power adapter illustrated in the above-mentioned embodiments of the present disclosure. The first pin D1, the second pin D2, the third pin D3, and the fourth pin D4 can be a VBUS pin, a D+ pin, a D- pin, and a GND pin. In another embodiment, the first pin D1, the second pin D2, the third pin D3, and the fourth pin D4 can be the VBUS pin, the D- pin, the D+ pin, and the GND pin.

The first switching circuit 202 connects to the second pin D2 and further controllably connects to the first pin D1.

The second switching circuit 203 connects to the third pin D3 and further controllably connects to the fourth pin D4.

The control circuit 204 connects to the first switching circuit 202 and the second switching circuit 203, and connects to the second pin D2 and the third pin D3 via the first switching circuit 202 and the second switching circuit 203 respectively. The first switching circuit 202 is controlled by the control circuit 204 to connect to the first pin D1 to short-circuit the first pin D1 and the second pin D2, and the second switching circuit 203 is also controlled by the control circuit 204 to connect to the fourth pin D4 to short-circuit the third pin D3 and the fourth pin D4, when the control circuit 204 accomplishes a handshake with the power adapter via the second pin D2 and the third pin D3. Specifically, when the control circuit 204 accomplishes the handshake with the power adapter via the D+ pin and the D- pin, the control circuit 204 controls the first switching circuit 202 to short-circuit the D+ pin and the VBUS and controls the second switching circuit 203 to short-circuit the D- pin and the GND. In an alternative embodiment, when the control circuit 204 accomplishes the handshake with the power adapter via the D+ pin and the D- pin, the control circuit 204 controls the first switching circuit 202 to short-circuit the D- pin and the VBUS and controls the second switching circuit 203 to short-circuit the D+ pin and the GND.

In some implementations, a handshake protocol of the handshake is sent from the terminal device first.

In some implementations, the control circuit 204 further controls the first switching circuit 202 to keep an original connection state with the second pin and controls the second switching circuit 203 to keep an original connection state with the third pin, when it fails in the handshake with the power adapter via the second pin and the third pin.

Specifically, when the terminal device 200 does not match the power adapter, the terminal device 200 returns to an ordinary charging mode.

In some implementations, the control circuit 204 further controls the first switching circuit 202 to disconnect from the first pin and controls the second switching circuit 203 to disconnect from the fourth pin, when the port 201 disconnects from the power adapter.

Specifically, the terminal device shakes hands via the D+ and the D- of the terminal device with the D+ and the D- of the power adapter. If the terminal device shakes hands with the power adapter successfully, the control circuit 204 of the terminal device 200 generates a control signal for a successful handshake. The control signal is configured to control the first switching circuit and the second switching circuit to short-circuit the VBUS pin and the D+ pin, and short-circuit the GND pin and the D- pin of the terminal device; or to short-circuit the VBUS pin and the D- pin, and short-circuit the GND pin and the D+ pin; accordingly, the control circuit 105 of the power adapter 100 generates a control signal for the successful handshake. The control signal is configured to control the first switching circuit and the second switching circuit to further control to short-circuit the VBUS pin and the D+ pin, and short-circuit the GND pin and the D- pin of the power adapter; or to short-circuit the VBUS pin and the D- pin, and short-circuit the GND pin and the D+ pin, so that both the power adapter and the terminal device achieve a fast charging mode synchronously. If the terminal device fails in the handshake with the power adapter, both the power adapter and the terminal device maintain a normal communication state. When the terminal device detects that the power adapter disconnects from the terminal device, the control circuit of the terminal device generates a restoring signal, the restoring signal is configured to control the first switching circuit and the second switching circuit of terminal device 200 to return to only connect with the D+ pin and the D- pin, thus making the terminal device return to a normal communication state.

As can be seen, by means of embodiments of the present disclosure, the power adapter can detect whether a terminal device connects. When the power adapter detects a terminal device connects and shakes hands with the terminal device successfully, the power adapter controls to short-circuit the first pin and the second pin, and short-circuit the third pin and the fourth pin of the port of the power adapter, so as to increase power output to the short-circuited first pin and second pin, and to the short-circuited third pin and fourth pin, thereby achieving the maximum resource utilization of the ports in relation to current related charging technology that leads the D+ and the D- two cables to be idle when charging. Embodiments of the present disclosure achieve the maximum utilization of resource when a standard USB cable is charging, and improvement of charging capacity based on standard ports, thus facilitating increasing charging speed and shortening charging time.

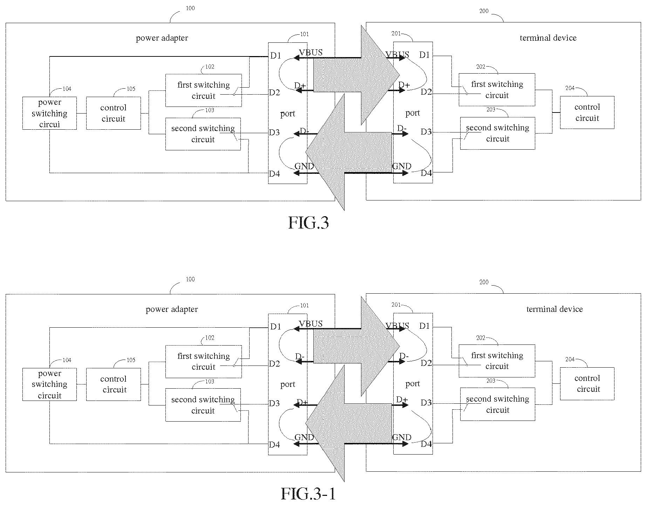

Referring to FIG.3, FIG.3 is a block diagram of a charging system according to an embodiment of the present disclosure. As illustrated in FIG.3, the charging system 300 includes a terminal device 200 and a power adapter 100.

Both the terminal device 200 and the power adapter 100 include a port 201, 101, a first switching circuit 202, 102, a second switching circuit 203, 103, and a control circuit 204, 105. The power adapter 100 further includes a power switching circuit 104.

Each port 201, 101 of the terminal device 200 and the power adapter 100 includes a first pin D1, a second pin D2, a third pin D3, and a fourth pin D4.

Each first switching circuit 202, 102 of the terminal device 200 and the power adapter 100 connects to each second pin D2 of the each port and further controllably connects to each first pin D1, and the each second switching circuit 203, 103 connects to each third pin D3 of the each port and further controllably connects to each fourth pin D4.

The power switching circuit 105 connects to the first pin D1 and the fourth pin D4 of the port 101 of the power adapter 100.

Each control circuit 204, 105 of the terminal device 200 and the power adapter 100 connects to the each first switching circuit 202, 102 and the each second switching circuit 203, 103, and connects to the second pin D2 and the third pin D3 of the each port via the each first switching circuit 202, 102 and the each second switching circuit 203, 103 respectively. When the each control circuit 204, 105 accomplishes a handshake with each other via the second pin D2 and the third pin D3, the each control circuit 204, 105 of the terminal device 200 and the power adapter 100 controls the each first switching circuit 202, 102 to further connect to the each first pin D1 to short-circuit the each first pin D1 and the each second pin D2 of the each port, and controls the each second switching circuit 203, 103 to further connect to the each fourth pin D4 to short-circuit the each third pin D3 and the each fourth pin D4 of the each port. The control circuit 105 of the power adapter 100 further controls the power switching circuit 104 to increase power output to the short-circuited first pin D1 and second pin D2 and, to the short-circuited third pin D3 and fourth pin D4 of power adapter 100.

Specifically, the terminal device 200 shakes hands via the D+ and the D- of the terminal device 200 with the D+ and the D- of the power adapter 100. If the terminal device 200 shakes hands with the power adapter 100 successfully, the control circuit 204 of the terminal device 200 generates a control signal for a successful handshake. The control signal is configured to short-circuit the VBUS pin and the D+ pin, and short-circuit the GND pin and the D- pin of the terminal device 200. Accordingly, the control circuit 105 of the power adapter 100 generates a control signal for the successful handshake. The control signal is configured to short-circuit the VBUS pin and the D+ pin, and short-circuit the GND pin and the D- pin of the power adapter 100.

Alternatively, referring to FIG3-1, FIG.3-1 is a block diagram of a charging system according to another embodiment of the present disclosure. The terminal device 200 shakes hands via the D+ and the D- of the terminal device 200 with the D+ and the D- of the power adapter 100. If the terminal device 200 shakes hands with the power adapter 100 successfully, the control circuit 204 of the terminal device 200 generates a control signal for a successful handshake. The control signal is configured to short-circuit the VBUS pin and the D- pin, and short-circuit the GND pin and the D+ pin of the terminal device 200. Accordingly, the control circuit of the power adapter 100 generates a control signal for the successful handshake. The control signal is configured to short-circuit the VBUS pin and the D- pin, and short-circuit the GND pin and the D+ pin of the power adapter 100.

In some implementations, when the control circuit of the power adapter 100 accomplishes the handshake with the terminal device 200, the control circuit of the power adapter 100 controls the power switching circuit to increase a current output to the short-circuited first pin D1 and second pin D2, and to the short-circuited third pin D3 and fourth pin D4.

In some implementations, when the control circuit of the power adapter 100 accomplishes the handshake with the terminal device 200, the control circuit of the power adapter 100 controls the power switching circuit 104 to increase a voltage applied to the short-circuited first pin D1 and second pin D2, and to the short-circuited third pin D3 and fourth pin D4.

In some implementations, when the control circuit of the power adapter 100 accomplishes the handshake with the terminal device 200, the control circuit controls the power switching circuit 104 to increase a current output to the short-circuited first pin D1 and second pin D2, and to the short-circuited third pin D3 and fourth pin D4, and increase a voltage applied to the short-circuited first pin D1 and second pin D2, and to the short-circuited third pin D3 and fourth pin D4.

In some implementations, the control circuit 105 of the power adapter 100 further connects to the first pin D1 of the power adapter, and is configured to provide working power for the control circuit.

In some implementations, the control circuit of the power adapter 100 further includes a control chip and an optocoupler circuit. The control chip connects to the first switching circuit and the second switching circuit of the power adapter 100, and connects to the power switching circuit via the optocoupler circuit. The specific structure of the control circuit 105 of the power adapter 100 can be referred to the block diagram of the control circuit of the power adapter, illustrated in FIG.1-2.

In some implementations, the power switching circuit includes a rectifying circuit, an electric transformer circuit, and a power control circuit. The rectifying circuit is configured to connect to an external alternating current power and convert it to a direct current power. The electric transformer circuit includes an input end for inputting the direct current power and an output end connecting with the first pin. The power control circuit is configured to receive a control signal from the control circuit of the power adapter 100 and control output power of the electric transformer circuit correspondingly. The specific structure of the power switching circuit can be referred to the block diagram of the power switching circuit of the power adapter, illustrated in FIG.1-3.

In some implementations, a handshake protocol of the handshake is sent from the terminal device 200 first.

In some implementations, the each control circuit 204, 105 of the terminal device 200 and the power adapter 100 further controls the each first switching circuit 202, 102 to keep an original connection state with the each second pin D2 and controls the each second switching circuit 203, 103 to keep an original connection state with the each third pin D3, when the each control circuit 204, 105 fails in the handshake with each other via the each second pin D2 and the each third pin D3.

In some implementations, the each control circuit 204, 105 of the terminal device 200 and the power adapter 100 further controls the each first switching circuit 202, 102 to disconnect from the each first pin D1 and controls the each second switching circuit 203, 103 to disconnect from the each fourth pin D4, when the each port disconnects from each other.

The specific structure of the terminal device 200 and the power adapter 100 can be referred to related descriptions in the two above-mentioned embodiments of the present disclosure, and will not be repeated herein.

As can be seen, by means of embodiments of the present disclosure, the power adapter can detect whether there is a terminal device connects. When the power adapter detects that a terminal device connects and shakes hands with the terminal device successfully, the power adapter controls to short-circuit the first pin and the second pin, and short-circuit the third pin and the fourth pin of the port of the power adapter, so as to increase power output to the short-circuited first pin and second pin, and to the short-circuited third pin and fourth pin, thereby achieving the maximum resource utilization of the ports in relation to currently related charging technology that leads to that the D+ and the D- two cables to be idle when charging. Embodiments of the present disclosure achieve the maximum utilization of resource when a standard USB cable is charging, and improvement of charging capacity based on standard ports, thus facilitating increasing charging speed and shortening charging time.

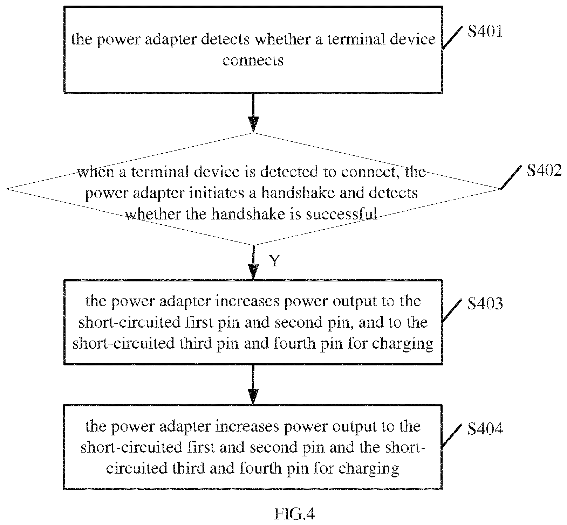

Referring to FIG.4, FIG.4 is a flow chart diagram of a charging method according to an embodiment of the present disclosure. The charging method can be applied to a power adapter with a port and the port includes a first pin, a second pin, a third pin, and a fourth pin. Referring to FIG.4, the charging method can include the follows.

S401, the power adapter detects whether a terminal device connects.

S402, when a terminal device is detected to connect, the power adapter initiates a handshake and detects whether the handshake is successful.

S403, when the handshake is successful, the power adapter short-circuits the first pin and the second pin and short-circuits the third pin and the fourth pin.

S404, the power adapter increases power output to the short-circuited first pin and second pin, and to the short-circuited third pin and fourth pin for charging.

In some implementations, the specific implementation manner of increasing the power output to the short-circuited first pin and second pin, and to the short-circuited third pin and fourth pin for charging can be achieved as follows.

The power adapter increases one of a current, a voltage, and both the current and the voltage output to the short-circuited first pin and second pin, and to the short-circuited third pin and fourth pin for charging.

In some implementations, the power adapter can perform the following operations after initiating a handshake and detecting whether the handshake is successful.

When the handshake is failing, the power adapter keeps an original state of the first pin and the second pin and keeps an original state of the third pin and the fourth pin.

In some implementations, the power adapter can perform the following operations after increasing power output to the short-circuited first pin and second pin and, to the short-circuited third pin and fourth pin for charging.

The power adapter detects whether the terminal device disconnects.

When the terminal device is detected to disconnect, the power adapter controls the first pin and the second pin to return to the original state and controls the third pin and the fourth pin to return to the original state.

The specific structure of the terminal device and the power adapter can be referred to related descriptions in the two above-mentioned embodiments of the present disclosure, and will not be repeated here.

As can be seen, by means of embodiments of the present disclosure, a power adapter can detect whether a terminal device connects. When the power adapter detects that a terminal device connects and shakes hands with the terminal device successfully, the power adapter controls to short-circuit the first pin and the second pin, and to short-circuit the third pin and the fourth pin of the port of the power adapter, so as to increase power output to the short-circuited first pin and second pin and the short-circuited third pin and fourth pin, thereby achieving the maximum resource utilization of the ports in relation to currently related charging technology that leads the D+ and the D- two cables to be idle when charging. Embodiments of the present disclosure achieve the maximum utilization of resource when a standard USB cable is charging, and improvement of charging capacity based on standard ports, thus facilitating increasing charging speed and shortening charging time.

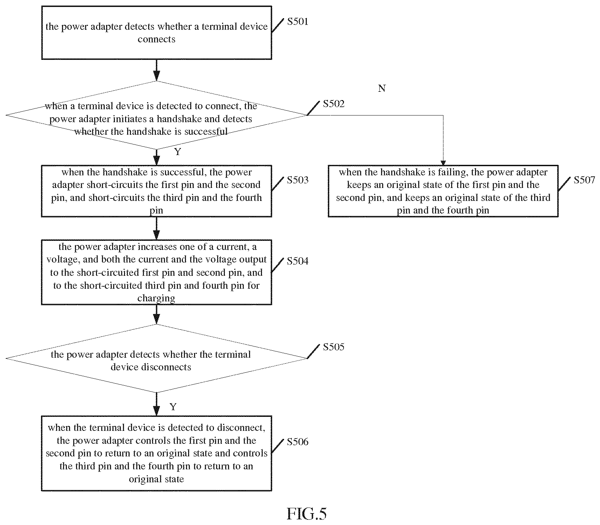

Referring to FIG.5, FIG.5 is a flow chart diagram of a charging method according to another embodiment of the present disclosure. The charging method can be applied to a power adapter with a port and the port includes a first pin, a second pin, a third pin, and a fourth pin. Referring to FIG.5, the method can include the follows.

S501, the power adapter detects whether a terminal device connects.

S502, when a terminal device is detected to connect, the power adapter initiates a handshake and detects whether the handshake is successful.

When the power adapter accomplishes the handshake with the terminal device successfully, the terminal device performs the step from S503 to S506. When the power adapter fails in the handshake with the terminal device, the terminal device performs the step S507.

S503, when the handshake is successful, the power adapter short-circuits the first pin and the second pin, and short-circuits the third pin and the fourth pin.

S504, the power adapter increases one of a current, a voltage, and both the current and the voltage output to the short-circuited first pin and second pin, and to the short-circuited third pin and fourth pin for charging.

S505, the power adapter detects whether the terminal device disconnects.

S506, when the terminal device is detected to disconnect, the power adapter controls the first pin and the second pin to return to an original state and controls the third pin and the fourth pin to return to an original state.

S507, when the handshake is failing, the power adapter keeps an original state of the first pin and the second pin, and keeps an original state of the third pin and the fourth pin.

The specific structure of the terminal device and the power adapter can be referred to related descriptions in the two above-mentioned embodiments of the present disclosure, and will not be repeated here.

As can be seen, by means of embodiments of the present disclosure, a power adapter can detect whether a terminal device connects. When the power adapter detects that a terminal device connects and shakes hands with the terminal device successfully, the power adapter controls to short-circuit the first pin and the second pin, and short-circuit the third pin and the fourth pin of the port of the power adapter, so as to increase power output to the short-circuited first pin and second pin, and to the short-circuited third pin and fourth pin, thereby achieving the maximum resource utilization of the ports in relation to currently charging technology that leads the D+ and the D- two cables to be idle when charging. Embodiments of the present disclosure achieve the maximum utilization of resource when a standard USB cable is charging, and improvement of charging capacity based on standard ports, thus facilitating increasing charging speed and shortening charging time.

Embodiments of the present disclosure provide a computer storage media as well. The computer storage media stores programs. The programs specifically include instructions configured to execute some or all of the operations in any method for data communication described in the above-mentioned method embodiments.

It should be explained, for each of the aforementioned method embodiment, for the sake of simplicity, it is generally described as a combination of a series of actions; however, those skilled in the art should know that the present disclosure is not restricted by the sequence of the actions described. Based on the present disclosure, some steps can be conducted in other sequences or simultaneously. Those skilled in the art should know that the embodiments described herein are exemplary embodiments, actions and units/modules involved may not be necessary for the present disclosure.

In the above-mentioned embodiments, the descriptions of various embodiments each have a focus, and portions not detailed in one embodiment can refer to a relevant description of the other embodiments.

Among the embodiments provided in the present disclosure, it should be understood that, the apparatus disclosed can be implemented in other ways. For example, the above-mentioned apparatus embodiments are only schematic; for example, the division of the above-mentioned units is only a division of logic function, and other ways of division can be adopted when implemented. For example, a plurality of units or assemblies can be combined or integrated into another system, or some features can be omitted or not implemented. Mutual coupling, direct coupling, or communication connection displayed or discussed herein can be an indirect coupling or communication connection through some interfaces, devices, or units, and can be electrical or other forms.

The above-mentioned units illustrated as separate components may be or may not be separated physically, components displayed as units may be or may not be physical units and can be located in one place or distributed over a plurality of network units. Part of or all of the units can be chosen according to actual needs to achieve aims of solutions of the present disclosure.

Besides, each functional unit in embodiments of the present disclosure can be integrated into a processing unit, or each functional unit can exist individually and physically, or two or more units can be integrated into a unit. The above-mentioned integrated units can be implemented in the form of software functional units or hardware.

If the above-mentioned integrated units are implemented in the form of software functional units and are sold or used as independent products, they can be stored in a computer readable storage medium. Based on this understanding, parts of the technical solutions of the present disclosure that make a contribution to the related art or all or part of the technical solutions can be embodied in the form of software products. The computer software products can be stored in a storage medium, including one or more instructions for causing computer equipment (such as a personal computer, a server, a network device and the like, and specifically, a processor of the computer equipment) to implement all or part of steps of the above-mentioned methods of the embodiments of the present disclosure. The above-mentioned storage medium can include: USB flash disk, mobile disk, disk, Compact Disc (CD), Read-Only Memory (ROM) or Random Access Memory (RAM) and all kinds of medium that can store program codes.

It will be understood by those of ordinary skill in the art that, implementation of all or part of the processes in the method of the embodiments described above can be accomplished by a computer program to instruct the associated hardware; the computer program can be stored in a computer-readable storage medium. The storage medium can be a flash disk, a read-only memory (ROM), a random access memory (RAM), a magnetic disk, an optical disk, or the like.

While the method for controlling the screen of the user terminal and the user terminal provided in the present disclosure has been described in detail above with reference to the exemplary embodiments, the scope of the present disclosure is not limited thereto. As will occur to those skilled in the art, the present disclosure is susceptible to various modifications and changes without departing from the spirit and principle of the present disclosure. Therefore, the scope of the present disclosure should be determined by the scope of the claims.

## Claims

1. A power adapter, comprising:
a port, configured to connect with a terminal device for charging, wherein the port comprises a first pin, a second pin, a third pin, and a fourth pin;
a first switching circuit, connecting to the second pin and further controllably connecting to the first pin;
a second switching circuit, connecting to the third pin and further controllably connecting to the fourth pin;
a power switching circuit, connecting to the first pin and the fourth pin; and
a control circuit, connecting to the power switching circuit, the first switching circuit, and the second switching circuit, and connecting to the second pin and the third pin via the first switching circuit and the second switching circuit respectively; wherein, when the control circuit accomplishes a handshake with the terminal device via the second pin and the third pin, the control circuit controls the first switching circuit to further connect to the first pin to short-circuit the first pin and the second pin, controls the second switching circuit to further connect to the fourth pin to short-circuit the third pin and the fourth pin, and controls the power switching circuit to increase power output to the short-circuited first pin and second pin, and to the short-circuited third pin and fourth pin.

2. The power adapter of claim 1, wherein when the control circuit accomplishes the handshake with the terminal device via the second pin and the third pin, the control circuit controls the power switching circuit to increase a current output to the short-circuited first pin and second pin, and to the short-circuited third pin and fourth pin.

3. The power adapter of claim 2, wherein when the control circuit accomplishes the handshake with the terminal device, the control circuit controls the power switching circuit to make the current of the short-circuited first pin and second pin and the short-circuited third pin and fourth pin larger than 1.8A.

4. The power adapter of claim 1, wherein when the control circuit accomplishes the handshake with the terminal device, the control circuit controls the power switching circuit to increase a voltage applied to the short-circuited first pin and second pin, and to the short-circuited third pin and fourth pin.

5. The power adapter of claim 4, wherein when the control circuit accomplishes the handshake with the terminal device, the control circuit controls the power switching circuit to make the voltage of the short-circuited first pin and second pin and the short-circuited third pin and fourth pin larger than 3.8V.

6. The power adapter of claim 1, wherein when the control circuit accomplishes the handshake with the terminal device, the control circuit controls the power switching circuit to increase a current output to the short-circuited first pin and second pin, and to the short-circuited third pin and fourth pin, and to increase a voltage applied to the short-circuited first pin and second pin, and to the short-circuited third pin and fourth pin.

7. The power adapter of claim 6, wherein when the control circuit accomplishes the handshake with the terminal device, the control circuit controls the power switching circuit to make the voltage of the short-circuited first pin and second pin and the short-circuited third pin and fourth pin larger than 3.8V and to make the current of the short-circuited first pin and second pin and the short-circuited third pin and fourth pin larger than 1.8A.

8. The power adapter of claim 1, wherein the control circuit further connects to the first pin and controls the power switching circuit to keep providing working power for the control circuit according to a voltage or a current of the first pin.

9. The power adapter of claim 1, wherein the control circuit further comprises a control chip and an optocoupler circuit; the control chip connects to the first switching circuit and the second switching circuit, and to the power switching circuit via the optocoupler circuit.

10. The power adapter of claim 1, wherein the power switching circuit comprises a rectifying circuit, an electric transformer circuit, and a power control circuit; the rectifying circuit is configured to connect to an external alternating current power and convert the alternating current power to a direct current power; the electric transformer circuit comprises an input end for inputting the direct current power and an output end connecting with the first pin; the power control circuit is configured to receive a control signal from the control circuit and control output power of the electric transformer circuit correspondingly.

11. The power adapter of claim 1, wherein a handshake protocol of the handshake is sent from the terminal device first.

12. The power adapter of claim 1, wherein when the handshake fails with the terminal device via the second pin and the third pin, the control circuit controls the first switching circuit to keep an original connection state with the second pin and controls the second switching circuit to keep an original connection state with the third pin.

13. The power adapter of claim 1, wherein when the port disconnects from the terminal device, the control circuit further controls the first switching circuit to disconnect from the first pin and controls the second switching circuit to disconnect from the fourth pin.

14. A terminal device, comprising:
a port, configured to connect with a power adapter to be charged, wherein the port comprises a first pin, a second pin, a third pin, and a fourth pin;
a first switching circuit, connecting to the second pin and further controllably connecting to the first pin;
a second switching circuit, connecting to the third pin and further controllably connecting to the fourth pin; and
a control circuit, connecting to the first switching circuit and the second switching circuit, and connecting to the second pin and the third pin via the first switching circuit and the second switching circuit respectively; wherein, when the control circuit accomplishes a handshake with the power adapter via the second pin and the third pin, the control circuit controls the first switching circuit to further connect to the first pin to short-circuit the first pin and the second pin, and controls the second switching circuit to further connect to the fourth pin to short-circuit the third pin and the fourth pin.

15. The terminal device of claim 14, wherein a handshake protocol of the handshake is sent from the terminal device first.

16. The terminal device of claim 14, wherein when the handshake fails with the power adapter via the second pin and the third pin, the control circuit controls the first switching circuit to keep an original connection state with the second pin and controls the second switching circuit to keep an original connection state with the third pin.

17. The terminal device of claim 14, wherein when the port disconnects from the power adapter, the control circuit controls the first switching circuit to disconnect from the first pin and controls the second switching circuit to disconnect from the fourth pin,.

18. A charging system, comprising a terminal device and a power adapter, wherein
both the terminal device and the power adapter comprise a port, a first switching circuit, a second switching circuit, and a control circuit, and the power adapter further comprises a power switching circuit;
each port of the terminal device and the power adapter comprises a first pin, a second pin, a third pin, and a fourth pin;
each first switching circuit of the terminal device and the power adapter connects to each second pin of the each port and further controllably connects to each first pin, and each second switching circuit of the terminal device and the power adapter connects to each third pin of the each port and further controllably connects to each fourth pin;
the power switching circuit connects to the first pin and the fourth pin of the port of the power adapter; and
each control circuit of the terminal device and the power adapter connects to the each first switching circuit and the each second switching circuit, and connects to the second pin and the third pin of the each port via the each first switching circuit and the each second switching circuit respectively; wherein when the each control circuit accomplishes a handshake with each other via the each second pin and the each third pin, the each control circuit of the terminal device and the power adapter controls the each first switching circuit to further connect to the each first pin to short-circuit the each first pin and the each second pin and controls the each second switching circuit to further connect to the each fourth pin to short-circuit the each third pin and the each fourth pin; the control circuit of the power adapter further controls the power switching circuit to increase power output to the short-circuited first pin and second pin, and to the short-circuited third pin and fourth pin.

19. The charging system of claim 18, wherein when the control circuit of the power adapter accomplishes the handshake with the terminal device, the control circuit of the power adapter controls the power switching circuit to increase a current output to the short-circuited first pin and second pin and the short-circuited third pin and fourth pin.

20. The charging system of claim 18, wherein when the control circuit of the power adapter accomplishes the handshake with the terminal device, the control circuit of the power adapter controls the power switching circuit to increase a voltage applied to the short-circuited first pin and second pin and to the short-circuited third pin and fourth pin.

21. The charging system of claim 18, wherein when the control circuit of the power adapter accomplishes the handshake with the terminal device, the control circuit of the power adapter controls the power switching circuit to increase a current output to the short-circuited first pin and second pin, and to the short-circuited third pin and fourth pin, and increase a voltage applied to the short-circuited first pin and second pin and to the short-circuited third pin and fourth pin.

22. The charging system of claim 18, wherein the control circuit of the power adapter further connects to the first pin of the power adapter and is configured to provide working power for the control circuit.

23. The charging system of claim 18, wherein the control circuit of the power adapter further comprises a control chip and an optocoupler circuit, wherein the control chip connects to the first switching circuit and the second switching circuit of the power adapter, and connects to the power switching circuit via the optocoupler circuit.

24. The charging system of claim 18, wherein the power switching circuit comprises a rectifying circuit, an electric transformer circuit, and a power control circuit; wherein the rectifying circuit is configured to connect to an external alternating current power and convert the alternating current power to a direct current power; the electric transformer circuit comprises an input end for inputting the direct current power and an output end connecting with the first pin; the power control circuit is configured to receive a control signal from the control circuit of the power adapter and control output power of the electric transformer circuit correspondingly.

25. The charging system of claim 18, wherein a handshake protocol of the handshake is sent from the terminal device first.

26. The charging system of claim 18, wherein the each control circuit of the terminal device and the power adapter controls the each first switching circuit to keep an original connection state with the each second pin and controls the each second switching circuit to keep an original connection state with the each third pin, when the each control circuit of the terminal device and the power adapter fails in the handshake with the other via the each second pin and the each third pin.

27. The charging system of claim 18, wherein the each control circuit of the terminal device and the power adapter controls the first switching circuit to disconnect from the first pin and controls the second switching circuit to disconnect from the fourth pin, after the each port disconnects from the other.

28. A charging method, applied to a power adapter with a port, wherein the port comprises a first pin, a second pin, a third pin, and a fourth pin; wherein the method comprises:
detecting whether a terminal device connects;
when detecting that a terminal device connects, initiating a handshake and detecting whether the handshake is successful;
when the handshake is successful, short-circuiting the first pin and the second pin, and short-circuiting the third pin and the fourth pin; and
increasing power output to the short-circuited first pin and second pin, and to the short-circuited third pin and fourth pin for charging.

29. The charging method of claim 28, wherein increasing the power output to the short-circuited first pin and second pin, and to the short-circuited third pin and fourth pin for charging, comprises:
increasing one of a current, a voltage and both the current and the voltage output to the short-circuited first pin and second pin , and to the short-circuited third pin and fourth pin for charging.

30. The charging method of claim 28, further comprising the follows after initiating the handshake and detecting whether the handshake is successful:
when the handshake is failing, keeping an original not short-circuited state of the first pin and the second pin and keeping an original not short-circuited state of the third pin and the fourth pin.

31. The charging method of claim 28, further comprising the follows after increasing the power output to the short-circuited first pin and second pin, and to the short-circuited third pin and fourth pin for charging:
detecting whether the terminal device disconnects; and
when detecting that the terminal device disconnects, controlling the first pin and the second pin to return to an original not short-circuited state and controlling the third pin and the fourth pin to return to an original not short-circuited state.
